# EUROPEAN PATENT APPLICATION

(11) **EP 1 923 829 A2**
(43) Date of publication of application: **21.05.2008**
(21) Application number: 07254371.3
(22) Date of filing: 05.11.2007
(51) Int. Cl.: G06Q 10/00

(54) **Information display method, information processing apparatus, and recording medium recording information display program**

(30) Priority: 20.11.2006 JP 2006312498
(71) Applicant: Sony Corporation, Minato-ku Tokyo (JP)
(72) Inventor: Sako, Yoichiro, Tokyo (JP); Kawakami, Itaru, Tokyo (JP); Takehara, Mitsuru, Tokyo (JP); Nakamura, Takatoshi, Tokyo (JP)
(74) Representative: Horner, David Richard

(57) **Abstract**

A method of displaying item information related to a plurality of individuals having different properties onto a screen. The method includes the steps of: obtaining information indicating equivalent time in property, which is time corresponding to a property of each individual; setting a time axis on the screen such that equivalent time in property of each individual indicated by the obtained information has the same position and the same display length, or the same position or the same display length in a time axial direction; and displaying item information related to each individual on the screen in relation to the set time axis.

## Description

### BACKGROUND OF THE INVENTION

### 1. Field of the Invention

This invention relates to a method of displaying, on a screen, item information, such as personal history of a plurality of individuals, such as a person, an animal, or the like, an information processing apparatus performing the method of displaying the information, and a recording medium recording a computer program for displaying the information.

### 2. Description of the Related Art

It is thought that historical or personal historical items are described as chronological data, and are displayed in a chronological format. It is also thought that Japanese history and world history, a social background and a company's history, etc., are displayed as a time chart.

Specifically, Japanese Unexamined Patent Application Publication No. 11-249640 has disclosed the processing displaying a user's personal history from birth to the present by chronological data including a pair of date data and event data by dividing a time period into few-year periods, for example, a period from age 0 to age 4, a period from age 5 to age 9, and a period from age 10 to age 14.

Also, Japanese Unexamined Patent Application Publication No. 11-66049 has disclosed the processing as follows. When a request of displaying a chronological table is made from a user terminal to a server connected to the user terminal through a network, the personal chronological-table information of the request source is read from a personal event database, history information is read from a history event database, and data for displaying the chronological table in which both pieces of the information are disposed is generated to be transmitted to the user terminal of the request source.

Further, Japanese Unexamined Patent Application Publication No. 2006-4152 has disclosed the processing as follows. When the user enters a birth year or a current age in an initial setting screen, a time-of-life search execution screen is displayed. In the time-of-life search execution screen, by specifying a time of life (a grade in school or age), for example, that the user is a freshman at high school or the age of 16, etc., the titles of the music marketed or the hit music in the calendar year (for example, at the time of the year 2005, when the birth year is input as 1967, or the current age is input as age 38, if the time of life is specified as a freshman at high school or age 16, the year becomes 1983) corresponding to the specified time of life are displayed as a search result screen.

However, in a known time chart as shown in Japanese Unexamined Patent Application Publication No. 11-66049, two historical or personal historical items, such as social history and history of an individual, etc., are arranged at the right and at the left side, respectively, or at the upper side and at the lower side, respectively, simply in chronological order. Thus, for example, when the personal histories of persons in different eras are displayed in a time chart, it is difficult to abstract the difference in a property of age (accidental property) and to compare the persons more- universally (conceptually only by an intrinsic property).

For example, when the personal histories of the user and the personal history of Oda Nobunaga are displayed as a time chart, it is thought that the birth years and individual ages are matched at the same position in the chronological axis direction, the fact that the user was born in 1960 and the fact that Oda Nobunaga was born in 1534 are displayed at the start position of the chronological axis, and the following histories of the user and Oda Nobunaga are displayed in contrast.

In this case, from the personal history that Oda Nobunaga was recognized to have come of age at the age of 15, and died at the age of 47 in 1582, it seems that Oda Nobunaga had grown up fast and died in early life superficially.

However, there is a difference in era, social circumstances, the average life span, etc., between the era of Oda Nobunaga and the present, and thus it is not necessarily stated that Oda Nobunaga had grown up fast and died in early life.

That is to say, when the personal histories of the persons having different properties, such as an era, etc., are shown in a time chart simply in order of age, it is difficult to compare the persons more universally by abstracting the differences in an era, etc.

### SUMMARY OF THE INVENTION

Embodiments of the present invention make it possible to universally compare a plurality of individuals having different eras, types, etc., for example, persons in different eras, a person and an animal, an animal of one species and an animal of another species, etc., by abstracting the differences in eras, species, etc.

According to an embodiment of the present invention, there is provided a method of displaying item information related to a plurality of individuals having different properties onto a screen, the method including the steps of: obtaining information indicating equivalent time in property, which is time corresponding to a property of each individual; setting a time axis on the screen such that equivalent time in property of each individual indicated by the obtained information has the same position and the same display length, or the same position or the same display length in a time axial direction; and displaying item information related to each individual on the screen in relation to the set time axis.

In the above-described method of displaying information, when the personal history of the user and the personal history of Oda Nobunaga are displayed as a time chart, on the time axis on the screen, for example the average life span (for example, 80 years) of a person at the present time and the average life span (for example, 50 years) of a person in the era of Oda Nobunaga are displayed at the same position and by the same display length.

Thus, it is understood that from the viewpoint of a person's life by abstracting the difference in era, the fact that Oda Nobunaga and a person of the era of Oda Nobunaga had been recognized as an adult at the age of 15 is not necessarily a fast growth. At the same time, it is understood that the fact that Oda Nobunaga died at the age of 47 in 1582 does not necessarily mean a death in early life.

As described above, by this invention, it is possible to universally compare a plurality of individuals having different eras, types, etc., for example, persons in different eras, a person and an animal, an animal of one species and an animal of another species, etc., by abstracting the differences in era, species, etc.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a diagram illustrating an example of a system for executing a method of an embodiment of this invention;
Fig. 2 is a diagram illustrating the functional configuration of the information processing apparatus in Fig. 1;
Fig. 3 is a diagram illustrating an example of a time chart by an embodiment of this invention;
Fig. 4 is a diagram illustrating an example of processing executed by a CPU;
Fig. 5 is a diagram illustrating an example of a time chart by an embodiment of this invention;
Fig. 6 is a diagram illustrating an example of a time chart by an embodiment of this invention;
Fig. 7 is a diagram illustrating an example of a time chart by an embodiment of this invention;
Fig. 8 is a diagram illustrating an example of a time chart by an embodiment of this invention; and
Fig. 9 is a diagram illustrating an example of a time chart by an embodiment of this invention.

### DESCRIPTION OF THE PREFERRED EMBODIMENTS

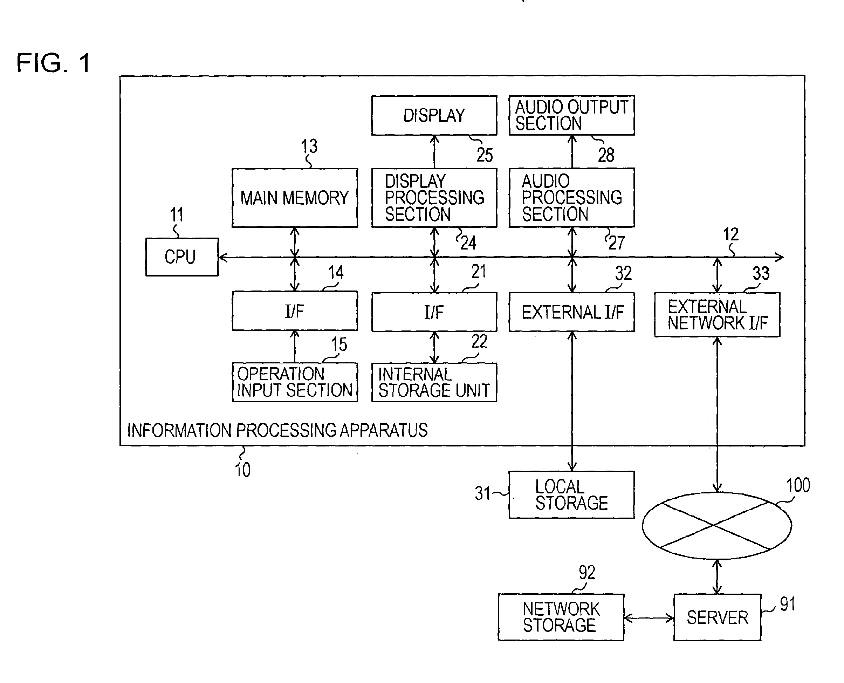

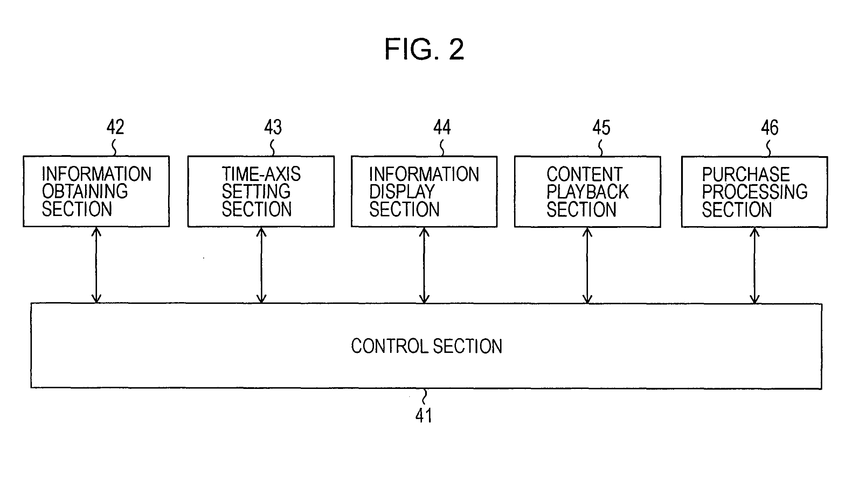

### 1. System configuration: Figs. 1 and 2

Fig. 1 illustrates an example of a system for executing an information display method according to an embodiment of this invention.

In the system of this example, an information processing apparatus 10 of the user side is connected to a server 91 through the Internet 100.

The information processing apparatus 10 has a function of processing and displaying information, and a function of connecting to the Internet 100. At the same time, the information processing apparatus 10 has a function of playing back music by music data and a function of playing back images by image data.

Specifically, the information processing apparatus 10 has a CPU 11, and a main memory 13 into which programs and data are loaded is connected to a bus 12 of the CPU 11. Also, an input section 15 is connected to the bus 12 through an interface 14.

Also, an internal storage unit 22 is connected to the bus 12 through an interface 21. A display 25 is connected to the bus 12 through a display processing section 24. An audio output section 28 is connected to the bus 12 through an audio processing section 27.

The storage unit 22 includes a semiconductor memory, a hard disk, etc., and stores various programs including information display programs, and data, such as various kinds of information, content data, etc.

The display processing section 24 performs decoding processing on screen data and image data. The display 25 is a liquid crystal display displaying screens and images or an organic electroluminescence display, etc. The audio processing section 27 performs decoding processing on audio data, such as music data. The audio output section 28 is an audio amplifier circuit and a speaker (a headphone).

Further, an external interface 32 for connecting to an external local storage 31 and an external network interface 33 for connecting to the Internet 100 are connected to the bus 12.

The local storage 31 stores data, such as various kinds of information and content data, etc. Such data is taken in from the local storage 31 to the information processing apparatus 10.

The server 91 provides various information and content, etc., as Web services on a Web site, and transmits data, such as various kinds of information and content data to the information processing apparatus 10 in response to a request from the information processing apparatus 10. A network storage 92 for storing data, such as various kinds of information and content data, is connected to the server 91.

As shown in Fig. 2, for the display of item information, the payback of a content, and the purchase of goods or services, the above-described information processing apparatus 10 includes a control section 41, an information obtaining section 42, a time-axis setting section 43, an information display section 44, a content playback section 45, and a purchase processing section 46.

The control section 41 includes the CPU 11 and the main memory 13. The information obtaining section 42 includes the CPU 11, the interface 21, the external interface 32, and the external network interface 33. The time-axis setting section 43 includes the CPU 11, the main memory 13, and the display processing section 24. The information display section 44 includes the CPU 11, the main memory 13, and the display processing section 24. The content playback section 45 includes the CPU 11, the main memory 13, the display processing section 24, and the audio processing section 27. The purchase processing section 46 includes the CPU 11, the main memory 13, and the display processing section 24.

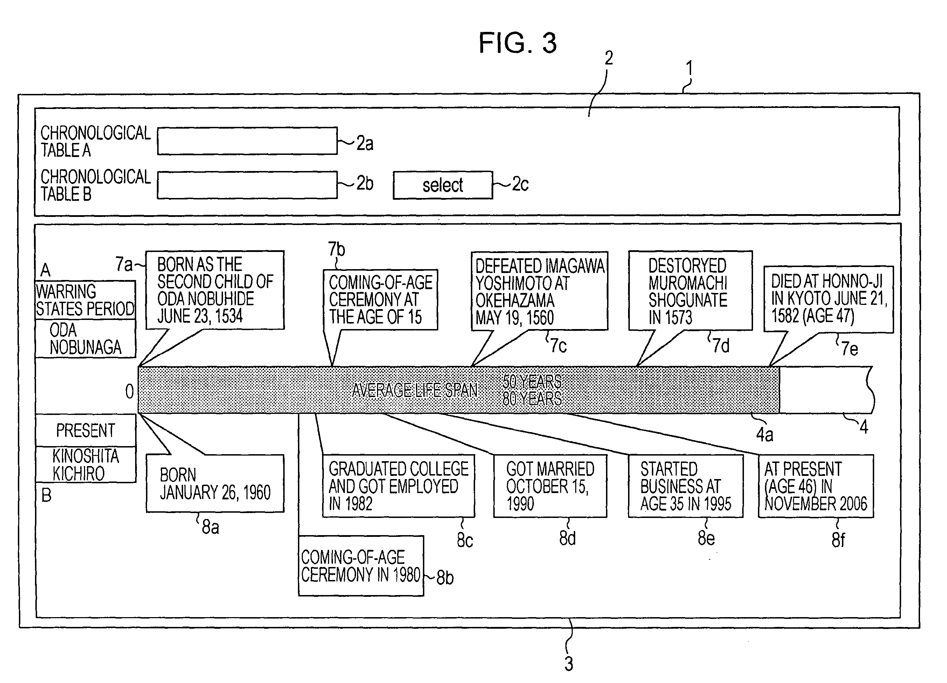

### 2. Creation and display of time chart of persons having different properties: Fig. 3 to Fig. 6

In the example system of Fig. 1, the information processing apparatus 10 creates and displays a time chart of persons having different properties, such as an era, etc., as follows.

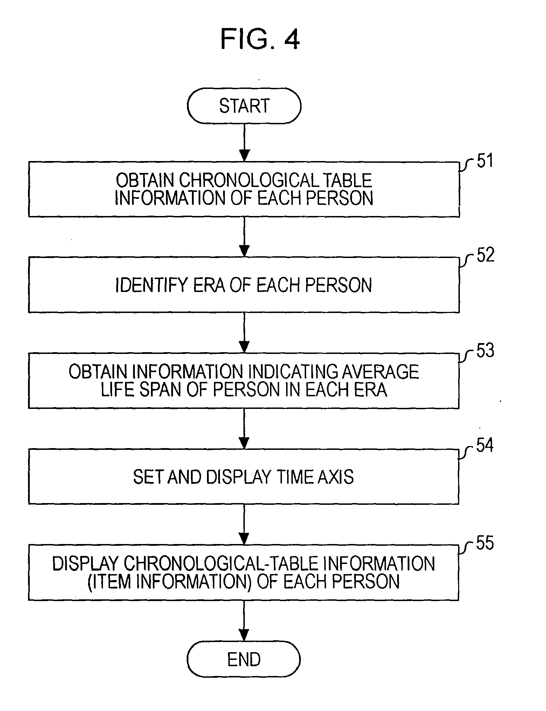

### 2-1. When the average life spans of persons in different eras are displayed the same: Figs. 3 and 4

First, a description will be given of the case where persons in different eras are displayed in a time chart, and at the same time, the position and the length of the average life span of a person in each era is made the same on the time axis.

### Creation and display of time chart

When the user creates and displays a time chart, the user displays, for example the screen 1 as shown in Fig. 3 on the display 25 by the operation by the operation input section 15.

Specifically, on the screen 1, an operation input area 2 and a chronological-table display area 3 are disposed, and chronological-table specification fields 2a and 2b, and various buttons, such as a selection button 2c, etc., are disposed in the operation input area 2.

When the user creates and displays a time chart of, for example Oda Nobunaga and the user himself/herself, the user specifies Oda Nobunaga as one of the chronological tables A in the chronological-table specification field 2a, and specifies the user himself/herself as the other of the chronological tables B in the chronological-table specification field 2b.

In this regard, it is possible to constitute the chronological-table specification fields 2a and 2b by a pull-down menu method, etc., with the descriptions of famous persons in each era in advance to allow the user to select one person among them.

When the user specifies each person in this manner and then operates the selection button 2c, the CPU 11 of the information processing apparatus 10 obtains the chronological information of each of the specified persons from the Internet 100 through the external network interface 33, from the local storage 31 through the external interface 32, and from the internal storage unit 22 through the interface 21.

Specifically, the chronological information of Oda Nobunaga can be obtained from the internal storage unit 22 or the local storage 31 if that information is stored in the internal storage unit 22 or the local storage 31. When the information is not stored in the internal storage unit 22 or the local storage 31, the information can be obtained from the Internet 100. Also, the chronological information of the user himself/herself is stored in the internal storage unit 22 or the local storage 31 in advance, ant thus the information can be obtained from the internal storage unit 22 or the local storage 31.

After the chronological information of each person is obtained, the CPU 11 of the information processing apparatus 10 identifies the era of each person (the era when each person lived, or the era when each person is living) by the chronological information. In this example, the CPU 11 identifies the Warring States period in Japan (the period from the Warring States period to Azuchi-Momoyama Era) for Oda Nobunaga from the chronological information. The CPU 11 identifies the present time (the year 2006) for the user himself/herself from the chronological information.

Furthermore, the CPU 11 of the information processing apparatus 10 obtains the information indicating the average life span of a person of each era (the era of each person), and detects the average life span of a person of each era.

The CPU 11 obtains the information indicating the average life span of a person from the Internet 100, the internal storage unit 22, or the local storage 31.

The average life span of a person is different for each region, such as a country, etc., and is also different by a gender, etc. Thus, when the average life span of a person is statistically calculated or estimated for each property, such as an era, a region, a gender, etc., the average life span adapted to each of the properties is used.

After detecting the average life span of a person in each era in this manner, the CPU 11 of the information processing apparatus 10 sets and displays the time axis in the chronological-table display area 3 such that the average life span of a person in each era has the same position and length on the time axis.

When a time chart of Oda Nobunaga and the user himself/herself is created and displayed, suppose, for example, that (a) The average life span (the average for a man and a woman) of Japanese in the Warring States period when Oda Nobunaga lived is 50 years, and (b) The average life span (the average of a man and a woman) of Japanese at present is 80 years. Then, as shown in Fig. 3, a line segment from a start point to another point on the time axis 4 is assumed to be the average life span 4a. At the same time, for a person in the Warring States period, the average life span 4a is assumed to be 50 years, which is the period from birth to the reaching of age of the average life span 4a. For a person at the present time, the average life span 4a is assumed to be 80 years, which is the period from birth to the reaching of age of the average life span 4a.

Accordingly, for a person in the Warring States period, the time period for a unit length, such as 10 mm or 100 mm on the time axis 4 becomes 5/8 times that for a person at the present time. On the contrary, for a person at the present time, the unit length becomes 1.6 times that for a person in the Warring States period.

After setting and displaying the time axis 4 in the chronological-table display area 3 in this manner, the CPU 11 of the information processing apparatus 10 displays the chronological information of Oda Nobunaga and the chronological information of the user himself/herself in the chronological-table display area 3.

"Kinoshita Kichiro" in Fig. 3 is the user himself/herself. In the example in Fig. 3, five pieces of item information 7a, 7b, 7c, 7d, and 7e are displayed as the chronological information of Oda Nobunaga, and six pieces of item information 8a, 8b, 8c, 8d, 8e, and 8f are displayed as the chronological information of the user himself/herself.

By this example, the time when a person in the Warring States period was recognized as an adult at the age of 15 is 3/10 times the average life span of a person in the Warring States period. In contrast, the time when a person at the present time is recognized as an adult at the age of 20 is 2.5/10 times the average life span of a person at the present time.

Accordingly, when a comparison is made between the time of age 15 when Oda Nobunaga and a person in the Warring States period was recognized as an adult, and the time of age 20 when a person at the present time is recognized as an adult, it is understood that the time of age 15 when Oda Nobunaga and a person in the Warring States period was recognized as an adult is not early from the viewpoint of a person's life by abstracting the difference in era.

Also, the fact that Oda Nobunaga died at the age of 47 is not death in early life from the viewpoint of a person's life of the average life span of a person in the Warring States period and by abstracting the difference in era.

That is to say, by this example, it possible to more universally compare Oda Nobunaga or a person in the Warring States period, and the user himself/herself or a person at the present time by abstracting the difference in era.

Fig. 4 illustrates an example of a series of processing performed by the CPU 11 of the information processing apparatus 10 in accordance with the information display program when a time chart is created and displayed as shown in Fig. 3.

In this example, the user specifies the chronological tables A and B (each person) in the chronological-table specification fields 2a and 2b, and operates the selection button 2c, and thus the CPU 11 starts the processing for creating and displaying the time chart. First, in step 51, the chronological information of each of the specified persons is obtained, and in the next step 52, the era of each person is identified by the chronological information.

Next, in step 53, the CPU 11 obtains the information indicating the average life span of a person of each era identified. Next, in step 54, the CPU 11 sets and displays the time axis 4 in the chronological-table display area 3 such that each of the average life spans have the same position and length. Further, the processing proceeds to step 55, the CPU 11 displays the chronological information (item information) of each person obtained in step 51 in relation to the time axis 4, set and displayed in step 54.

In this regard, when an era is not identified from the chronological information, the CPU 11 should present that fact to the user on the screen 1, and should prompt the user to input an era. Also, when the information indicating the average life span of a person of that era is failed to be obtained, the CPU 11 should present that fact to the user on the screen 1, and should prompt the user to input the average life span. In this regard, the display of the time axis and the display of the chronological information may be conducted at the same time.

As a result of the above-described processing, the time chart created and displayed in the chronological-table display area 3 as shown in Fig. 3 is allowed to be stored in the internal storage unit 22 or the local storage 31 as the time chart. By this means, it is possible for the user to directly display the time chart on the display 25 at another occasion.

### Content playback

It is possible to relate a part of or all of the item information in the time chart to a content.

For example, it is possible to associate the item information 7e in Fig. 3 with the image (a moving image or a still image) of the scene in which Oda Nobunaga is fighting against the enemy at Honno-ji in a movie, and to associate the item information 8c with a piece of music the user used to listen to at that time.

In this manner, when a part of or all of the item information is set to be related to a content, the content is played back at the time of creation and display of the time chart.

For example, in the example in Fig. 3, if music is related only to the item information 8c, when the time chart is created and displayed as shown in Fig. 3, the music is automatically played back.

Also, for example, in the example of Fig. 3, if images are related to the item information 7c, 7e, 8a, 8b, and 8d, and pieces of music are related to the item information 8a, 8c, and 8d, when the item information 8a is selected by the click operation of the user, etc., the piece of music related to this is played back, and when the item information 8d is selected, the image and the piece of music related to this is played back.

If the content data, such as image data, music data, etc., for playing back the content is stored in the internal storage unit 22 or the local storage 31, the content data is obtained from the internal storage unit 22 or the local storage 31. If the content data is not stored in the internal storage unit 22 or the local storage 31, the content data is obtained from the Internet 100. The image played back is displayed, for example, in a partial area of the screen 1.

At this time, it is desirable to allow to store the content data obtained from the Internet 100 into the internal storage unit 22 or the local storage 31 in relation to the time chart. By this means, when the time chart is displayed on the display 25 at another occasion as described above, it is possible to play back the content, such as an image, music, etc., at the same time.

### Purchase of goods and services

It is possible to make a part of or all of the item information in the time chart related to goods and services that can be purchased on the Internet 100.

For example, that is the case where a certain item information includes an image, characters indicating certain goods or services, and the address (URL) of the sales source is attached to that item information.

In this case, when the user operates a predetermined operation on that item information in order to purchase the goods or the service, the CPU 11 executes the purchase processing.

Specifically, first, the CPU 11 connects to the above-described address through the external network interface 33 to display the purchase screen on the display 25. When the user applies for the purchase of the goods or the service on that purchase screen, and inputs the payment method of the charge, the purchase processing is performed between the information processing apparatus 10 of the user side and the server of the sales source, and thus the user can purchase the goods or the service.

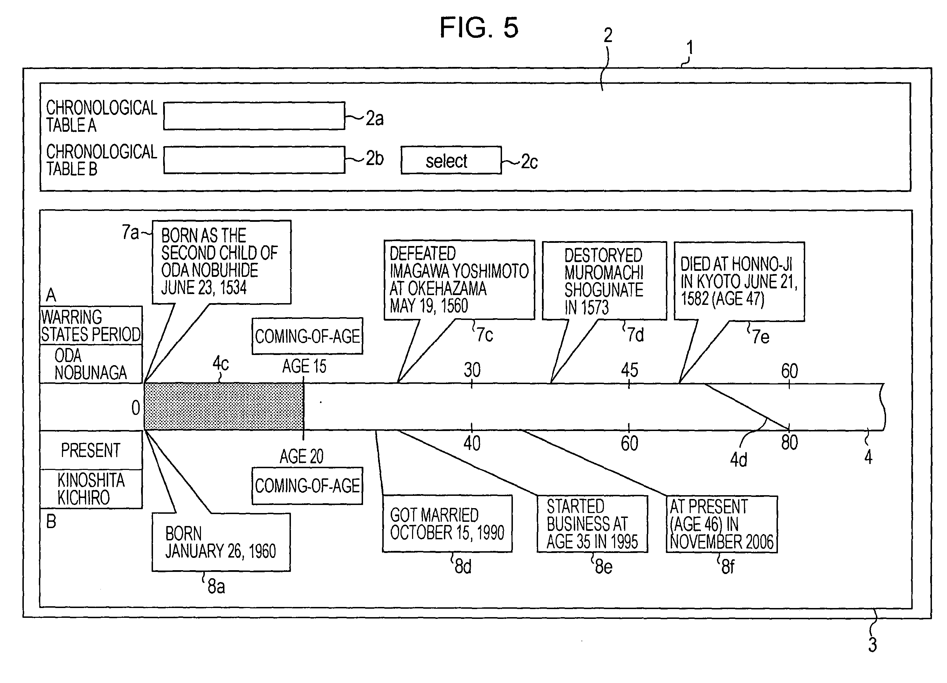

### 2-2. When another period is displayed at the same position and by the same length: Fig. 5

When a time chart of persons in different eras is created and displayed as described above, the time axis may be set and displayed such that, instead of the average life span, for example, the underage (immature) period of a person in each era, that is to say, the period from birth to the age recognized as an adult (recognized as matured) have the same position and the same length on the time axis.

Specifically, when a time chart of Oda Nobunaga and the user himself/herself is created and displayed as described above, as shown in Fig. 5, it is assumed that a line segment from a start point to another point on the time axis 4 is an underage period 4c. At the same time, it is assumed that for a person in the Warring States period, the underage period 4c is a period of 15 years, namely up to age 15, when the person is recognized as an adult, and for a person at the present time, the underage period 4c is a period of 20 years, namely up to age 20, when the person is recognized as an adult.

Accordingly, for a person in the Warring States period, the time period for a unit length, such as 10 mm or 100 mm on the time axis 4 becomes 3/4 times that for a person at the present time. On the contrary, for a person at the present time, the unit length becomes 1.33 times that for a person in the Warring States period. Also, assuming that the display length of the underage period 4c is L, the display length of the average life span (50 years) of a person in the Warring States period becomes 3.33L, and the display length of the average life span (80 years) of a person at the present time becomes 4L.

In this case, at the same time, it is preferable to make clear the average life span of a person in the Warring States period and the average life span of a person at the present time at a glance, for example, by displaying, on the time axis 4, a line 4d connecting a point indicating age 50 of a person in the Warring States period on the upper side on the time axis 4 and a point indicating age 80 of a person at the present time.

By this example, it possible to more universally compare Oda Nobunaga or a person in the Warring States period, and the user himself/herself or a person at the present time by abstracting the difference in age recognized as an adult due to the difference in era, or the difference in the absolute time length of the underage period.

The time axis may be set and displayed such that not an underage period, but a period from birth to an age recognized as old age of each individual, a period from age recognized as an adult to an age recognized as old age of each individual, a period from an age recognized as an adult to an average life span of each individual, or a period from an age recognized as old age to an average life span of each individual has the same position and the same length on the time axis.

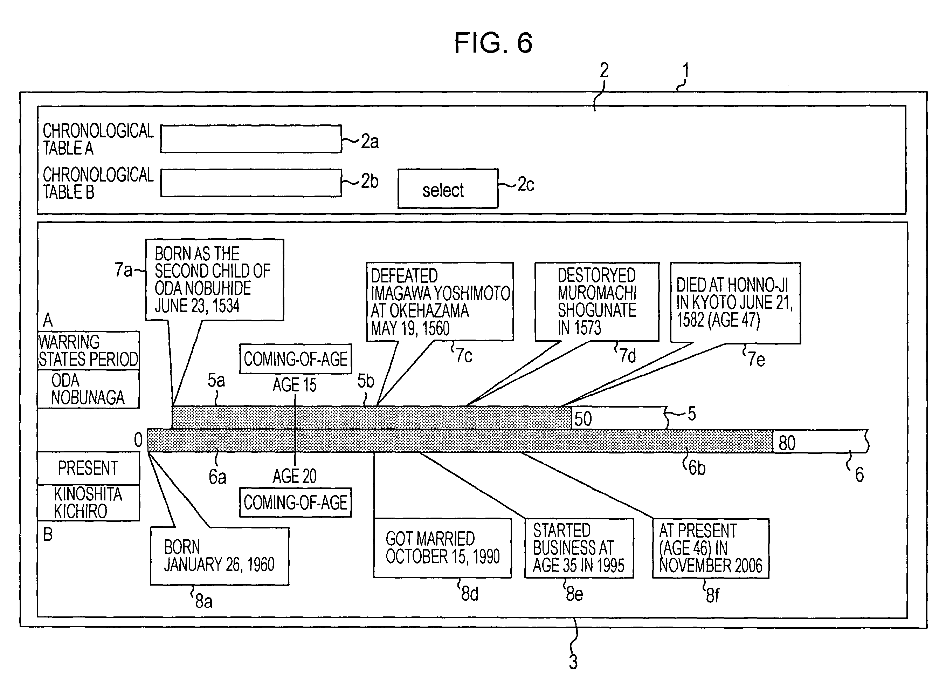

### 2-3. When a period corresponding to an era is displayed at the same position: Fig. 6

When a time chart of persons in different eras is created and displayed as described above, the time axis may be set and displayed such that the period (the point in time), such as the age recognized as an adult of a person in each era has the same position in the time axial direction.

Specifically, when a time chart of Oda Nobunaga and the user himself/herself is created and displayed as described above, as shown in Fig. 6, a time axis 5 is set and displayed for a person in the Warring States period, and a time axis 6 is set and displayed for a person at the present time such that the age (age 15) recognized as an adult for a person in the Warring States period and the age (age 20) recognized as an adult for a person at the present time have the same position.

In this case, the average life span of a person in the Warring States period is displayed by the length corresponding to the period of 50 years as shown by the shaded areas 5a and 5b on the time axis 5. The average life span of a person at the present time is displayed by the length corresponding to the period of 80 years as shown by the shaded areas 6a and 6b on the time axis 6.

By this example, it possible to more universally compare Oda Nobunaga or a person in the Warring States period, and the user himself/herself or a person at the present time by abstracting the difference in age recognized as an adult due to the difference in era.

The time axis may be set and displayed such that not an age recognized as an adult, but an age recognized as an old age or the age of the average life span of a person of each era has the same position and the same length on the time axis.

### 2-4. When a certain period is displayed by the same length

The time axis may be set and displayed such that a certain period of a person in each era does not have the same position in the time axial direction, but has the same display length.

For example, when a time chart of Oda Nobunaga and the user himself/herself is created and displayed as described above, in the same manner as the example shown in Fig. 6, the time axis for a person in the Warring States period, and the time axis for a person at the present time are separately set. However, each of age 0 has the same position, and each period from an age recognized as old age to an age of the average life span has the same display length as an old-age period.

Accordingly, suppose that a person in the Warring States period is recognized as an adult at the age of 15, is recognized as an old age at the age of 40, and has the average life span of 50 years. Suppose that a person at the present time is recognized as an adult at the age of 20, is recognized as an old age at the age of 60, and has the average life span of 80 years. Assuming that the display length of an old age period is L, for a person in the Warring States period, an underage period is displayed by 1.5L in length, and a period from age recognized as an adult to an age recognized as old age is displayed by 2.5L in length. For a person at the present time, an underage period is displayed by L in length, and a period from age recognized as an adult to old age is displayed by 2L in length.

By this example, it possible to more universally compare Oda Nobunaga or a person in the Warring States period, and the user himself/herself or a person at the present time by abstracting the difference in absolute time length of an old age-period due to the difference in era.

### 2-5. Creation and display of time chart on persons having different properties other than an era.

Each example described above is the case of creating and displaying a time chart of persons in different era. However, the average life span of a person and an age recognized as an adult, etc., are different by an area, such as a country, a gender, etc., even if in the same era. Thus, each of the above-described examples of an embodiment of this invention can be applied to the case of creating and displaying a time chart of persons having different properties other than an era, such as a region, gender, etc.

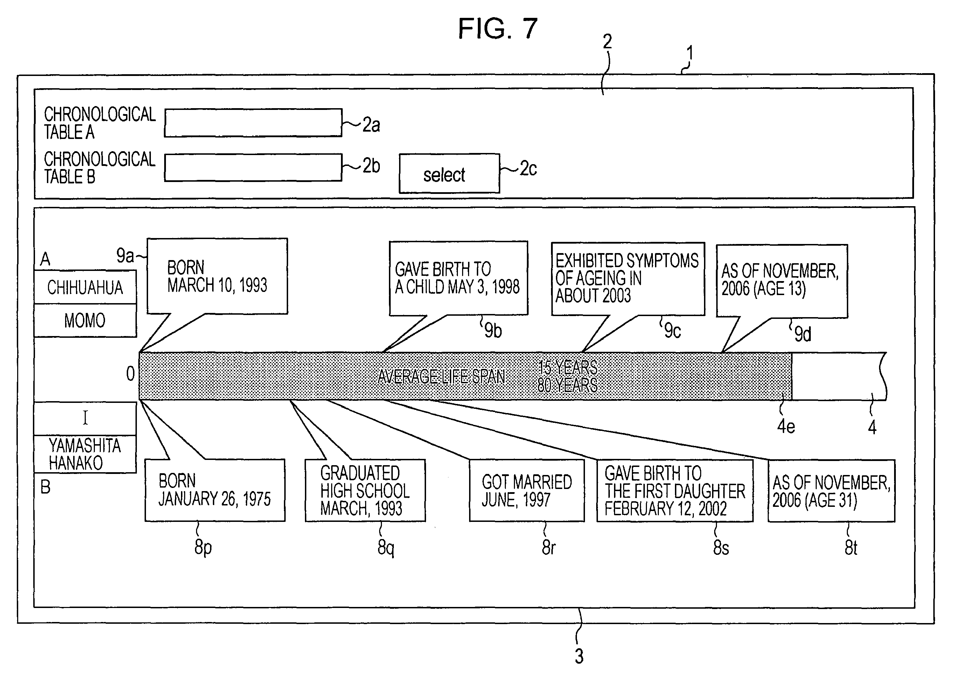

### 3. Case of person and animal, or case of animals of different species: Fig. 7 to Fig. 9

Embodiments of this invention can be applied to the case of creating and displaying a time chart of a person and an animal, or the case of creating and displaying a time chart of different species of animals, such as a dog and a cat, etc.

### 3-1. Case of person and animal: Fig. 7 to Fig. 9

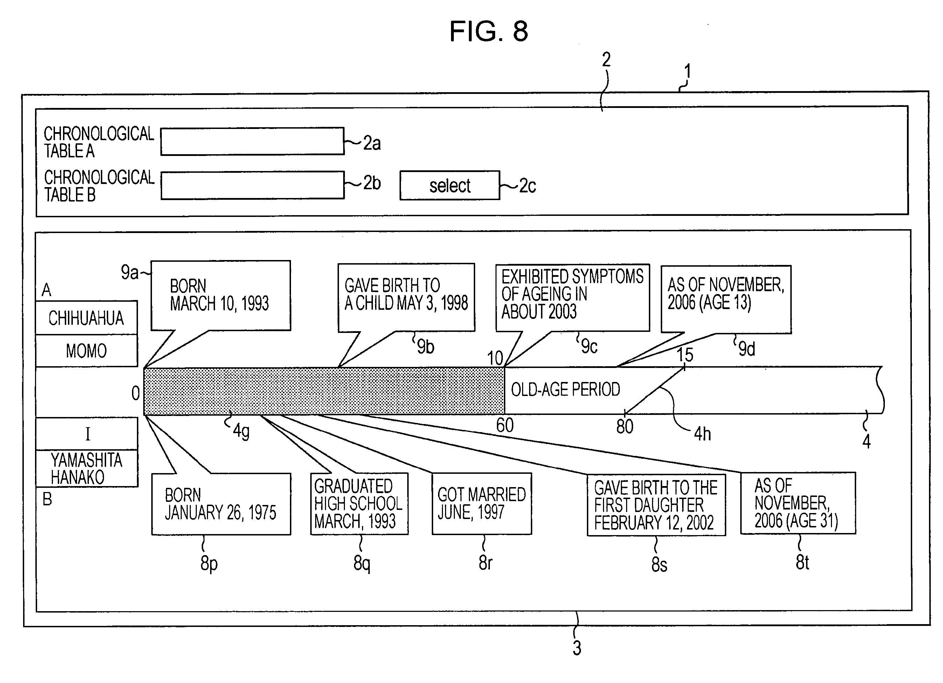

As an example of the case where a time chart of a person and an animal is created and displayed, a description will be given of the case where the personal history of the user himself/herself and the record of a dog the user is keeping as a pet are displayed in comparison.
When a period, such as the average life span is displayed by the same length: Figs. 7 and 8

When a time chart of a person and an animal is created and displayed, for example it is preferable to set and display the time axis such that the average life span of a person and that of an animal have the same position and the same length on the time axis.

Fig. 7 illustrates an example of the above. In this example, a dog the user is keeping as a pet is a chihuahua (the pet name: Momo). In the chronological display area 3 of the screen 1 like the one shown in Fig. 3, the time axis 4 is set and displayed such that the average life spans of a chihuahua and a person have the same position and length on the time axis.

Specifically, it is assumed that the average life span of a chihuahua is 15 years, and the average life span of a person is 80 years. It is also assumed that a line segment from a start point to another point on the time axis 4 is the average life span 4e. At the same time, it is assumed that for a chihuahua, the average life span 4e is a period of 15 years, when the chihuahua reaches the average life span from birth, and for a person, the average life span 4e is a period of 80 years, when the person reaches the average life span from birth.

Accordingly, for a chihuahua, the time period for a unit length, such as 10 mm or 100 mm on the time axis 4 becomes 3/16 times that for a person. On the contrary, for a person, the unit length becomes 5.33 times that for a chihuahua.

Furthermore, in relation to the time axis 4, in the chronological display area 3, four pieces of item information 9a, 9b, 9c, and 9d are displayed as the chronological information of Momo, and five pieces of item information 8p, 8q, 8r, 8s, and 8t are displayed as the chronological information of the user herself.

By this example, at the present time, Momo is 13 years old, and the user is 31 years old, and thus Momo is younger than the user from the viewpoint of the absolute age of the two. However, it is understood that Momo is much older than the user from the viewpoint of abstracting the difference in species, namely a chihuahua and a person.

Also, the age at which Momo gave birth to a child and the age at which the user gave birth to the first daughter are different in absolute age, but it is understood that these are about the same time from the viewpoint of each one's life.

The time axis may be set and displayed such that not an average life span, but, for example a non-old-age period of a chihuahua and a person, that is to say, a period from birth to an age recognized as old age has the same position and the same length on the time axis.

Specifically, a chihuahua is recognized to have become old at the age of 10 on the average, and a person is recognized to have become old at the age of 60. Thus, as shown in Fig. 8, it is assumed that a line segment from a start point to another point on the time axis 4 is a non-old-age period 4g. At the same time, it is assumed that for a chihuahua, the non-old-age period 4g is a period of 10 years, when the chihuahua having become 10 years old, and for a person, the non-old-age period 4g is a period of 60 years, when the person having become 60 years old.

Accordingly, for a chihuahua, the time period for a unit length, such as 10 mm or 100 mm on the time axis 4 becomes 1/6 times that for a person at the present time. On the contrary, for a person, the unit length becomes 6 times that for a chihuahua. Also, assuming that the display length of the non-old-age period 4g is L, the display length of the average life span (15 years) of a chihuahua becomes 1.5L, and the display length of the average life span (80 years) of a person becomes 1.33L.

In this case, at the same time, it is preferable to make clear the average life span of a chihuahua and the average life span of a person at a glance, for example, by displaying, on the time axis 4, a line 4h connecting a point indicating age 15 of a chihuahua on the upper side on the time axis 4 and a point indicating age 80 of a person.

By this example, it is understood at a glance that at the present time, the user is in her young-age period, whereas Momo is in its old-age period. At the same time, it is understood that in the case of a chihuahua, an old-age period (a period from an age recognized as old to an average life span age) occupies a relatively larger portion of the average life span than the case of a person. On the contrary, it is understood that a non-old-age period occupies a smaller portion of the average life span.

The time axis may be set and displayed such that not a non-old-age period, but, for example an immature period (a period from birth to the age recognized as matured for a chihuahua, and the above-described underage period for a person) has the same position and the same Length on the time axis.

In this case, it is also understood at a glance that in the above-described example of Momo and the user herself, at the present time, the user is in her young-age period, whereas Momo is in its old-age period.

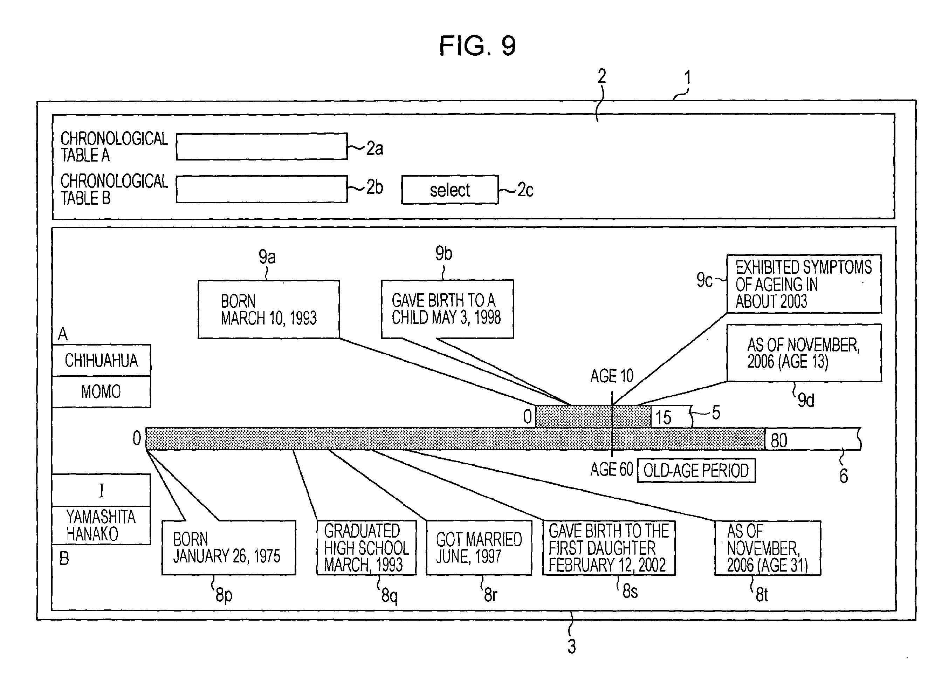

Furthermore, the time axis may be set and displayed such that old-age periods (periods from an age recognized as old to an average life span age) of a chihuahua and a person have the same position and the same length on the time axis. When a period according to the species is displayed by the same length: Fig. 9

When a time chart of a person and an animal is created and displayed, the time axis may be set and displayed such that the age recognized that both have grown matured (the age recognized as an adult for a person) or the period (point in time), such as the age recognized as an old age has the same position in the time axial direction.

Specifically, when a time chart of Momo and the user herself is created and displayed as described above, as shown in Fig. 9, a time axis 5 is set and displayed for a chihuahua, and a time axis 6 is set and displayed for a person such that the age (age 10) recognized as an old age for a chihuahua and the age (age 60) recognized as an old age for a person have the same position.

In this case, the average life span of a chihuahua is displayed by the length corresponding to the period of 15 years as shown by the shaded area on the time axis 5. The average life span of a person is displayed by the length corresponding to the period of 80 years as shown by the shaded area on the time axis 6.

In this example, it is also understood at a glance that at the present time, the user is in her young-age period, whereas Momo is in its old-age period.
When a certain period is displayed by the same length

In the case of a person and an animal, the time axis may be set and displayed such that a certain period does not have the same position in the time axial direction, but has the same display length.

For example, when a time chart of a chihuahua and the user herself is created and displayed as described above, in the same manner as the example shown in Fig. 9, the time axis for a chihuahua, and the time axis for a person are set separately. However, each of age 0 has the same position, and each old-age period (a period from an age recognized as old age to an average life span) has the same display length.

Accordingly, suppose that a chihuahua is recognized as old age at the age of 10, and has the average life span of 15 years. Suppose that a person is recognized as old age at the age of 60, and has the average life span of 80 years. Assuming that the display length of an old age period is L, for a chihuahua and for a person, 5 years and 20 years are displayed by a length of L, respectively. For a chihuahua, a non-old-age period is displayed by 2L in length, and for a person, a non-old-age period is displayed by 3L in length.

By this example, it possible to more universally compare Momo or a chihuahua, and the user herself or a person by abstracting the difference in absolute time length of an old age period due to the difference in species.

### 3-2. Case of animals of different species

Among animals, for example between dogs and cats, there are differences in the average life span, an age recognized as matured, an age recognized as old age, etc. Also, among dogs, for example between a small dog, chihuahua and a large dog, shepherd, there are differences in the average life span, an age recognized as matured, an age recognized as an old age, etc.

Accordingly, embodiments of this invention can be applied to the case where a time chart is created and displayed between animals of different species, such as a dog and a cat, a chihuahua and a shepherd, or the like.

The user sometimes keeps a dog and a cat, or keeps dogs of different species. In such a case, if the user creates and displays a time chart of individual animals by the method like the examples described above, it possible to more universally compare the individual animals by abstracting the difference in the absolute time length of the average life span due to the difference in species.

### 4. The other embodiments

Each individual to be compared is not limited to a person or an animal, such as a dog, a cat, etc., and may be each individual which is conceived to have a process from birth to death, for example, a creature such as an insect, a fungus, etc., a plant such as a tree, a flower, etc., or a star, etc. The time length of a period, such as the average life span, an immature period, etc., is not limited to a year, and may be a much shorter time period or a much longer time period.

An embodiment of the present invention provides a method of displaying item information related to a plurality of individuals having different properties onto a screen. The method includes the steps of: obtaining information indicating equivalent time in property, which is time corresponding to a property of each individual; setting a time axis on the screen such that equivalent time in property of each individual indicated by the obtained information has the same position and the same display length, or the same position or the same display length in a time axial direction; and displaying item information related to each individual on the screen in relation to the set time axis.

The present invention contains subject matter related to Japanese Patent Application JP 2006-312498 filed in the Japanese Patent Office on November 20, 2006, the entire contents of which are incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A method of displaying item information related to a plurality of individuals having different properties onto a screen, the method comprising the steps of:
obtaining information indicating equivalent time in property, which is time corresponding to a property of each individual;
setting a time axis on the screen such that equivalent time in property of each individual indicated by the obtained information has the same position and the same display length, or the same position or the same display length in a time axial direction; and
displaying item information related to each individual on the screen in relation to the set time axis.

2. The method of displaying information according to Claim 1,
wherein each individual is conceived to have a process from birth to death,
the property is an era, a region, a type, or a gender of each individual, and
the equivalent time in property is an average life span of each individual, a period from birth to an age recognized as maturity of each individual, a period from birth to an age recognized as old age of each individual, a period from an age recognized as maturity to old age of each individual, a period from an age recognized as maturity to an average life span of each individual, or a period from an age recognized as old age to an average life span of each individual.

3. The method of displaying information according to Claim 1,
wherein each individual is conceived to have a process from birth to death,
the property is an era, a region, a type, or a gender of each individual, and
the equivalent time in property is an age recognized as maturity of each individual, an age recognized as old age, or an average life span of each individual.

4. The method of displaying information according to Claim 1,
wherein information indicating the equivalent time in property is obtained through a network in the step of obtaining information.

5. The method of displaying information according to Claim 1,
wherein one of or all of the item information is related to a content, and
when item information related to the content is selected, the step of obtaining information includes playing back the content related to the selected item information.

6. The method of displaying information according to Claim 5,
wherein the content is played back by content data obtained through a network in the step of playing back the content.

7. The method of displaying information according to Claim 1,
wherein one of or all of the item information is related to goods or a service, and
when item information related to the goods or the service is selected, the step of obtaining information includes performing purchase processing of the goods or the service related to the selected item information through a network.

8. An information processing apparatus for displaying item information related to a plurality of individuals having different properties onto a screen, the apparatus comprising:
information obtaining means for obtaining information indicating equivalent time in property, which is time corresponding to a property of each individual;
time-axis setting means for setting a time axis on the screen such that equivalent time in property of each individual indicated by the obtained information has the same position and the same display length, or the same position or the same display length in a time axial direction; and
information displaying means for displaying item information related to each individual on the screen in relation to the set time axis.

9. The information processing apparatus according to Claim 8,
wherein each individual is conceived to have a process from birth to death,
the property is an era, a region, a type, or a gender of each individual, and
the equivalent time in property is an average life span of each individual, a period from birth to an age recognized as maturity of each individual, a period from birth to an age recognized as old age of each individual, a period from an age recognized as maturity to an age recognized as old age of each individual, a period from an age recognized as maturity to an average life span of each individual, or a period from an age recognized as old age to an average life span of each individual.

10. The information processing apparatus according to Claim 8,
wherein each individual is conceived to have a process from birth to death,
the property is an era, a region, a type, or a gender of each individual, and
the equivalent time in property is an age recognized as maturity of each individual, an age recognized as old age, or an average life span of each individual.

11. The information processing apparatus according to Claim 8,
wherein the information obtaining means obtains information indicating the equivalent time in property through a network.

12. The information processing apparatus according to Claim 8,
wherein one of or all of the item information is related to a content, and
when item information related to the content is selected, the information obtaining means includes means for playing back the content related to the selected item information.

13. The information processing apparatus according to Claim 12,
wherein the content playback means plays back the content by content data obtained through a network.

14. The information processing apparatus according to Claim 8,
wherein one of or all of the item information is related to goods or a service, and
when item information related to the goods or the service is selected, the information processing apparatus includes means for performing purchase processing of the goods or the service related to the selected item information through a network.

15. A recording medium for recording an information display program for causing a computer to perform processing displaying item information related to a plurality of individuals having different properties onto a screen, the program comprising:
information obtaining means for obtaining information indicating equivalent time in property, which is time corresponding to a property of each individual;
time-axis setting means for setting a time axis on the screen such that equivalent time in property of each individual indicated by the obtained information has the same position and the same display length, or the same position or the same display length in a time axial direction; and
information displaying means for displaying item information related to each individual on the screen in relation to the set time axis.

16. An information processing apparatus for displaying item information related to a plurality of individuals having different properties onto a screen, the apparatus comprising:
an information obtaining mechanism obtaining information indicating equivalent time in property, which is time corresponding to a property of each individual;
a time-axis setting mechanism setting a time axis on the screen such that equivalent time in property of each individual indicated by the obtained information has the same position and the same display length, or the same position or the same display length in a time axial direction; and
an information displaying mechanism displaying item information related to each individual on the screen in relation to the set time axis.
